# EUROPEAN PATENT APPLICATION

(11) **EP 4 749 793 A1**
(43) Date of publication of application: **27.05.2026**
(21) Application number: 24845964.6
(22) Date of filing: 19.07.2024
(51) Int. Cl.: H01M 50/284, H01M 50/184, H01M 50/105, H01M 50/595, H01M 50/588, H01M 50/533

(54) **BATTERY PACK**

(30) Priority: 21.07.2023 KR 20230095491; 19.03.2024 KR 20240037919
(71) Applicant: SAMSUNG SDI CO., LTD., Yongin-si, Gyeonggi-do 17084 (KR)
(72) Inventor: AN, Kang Sik, Yongin-Si Gyeonggi-do 17084 (KR); LEE, Seok Bong, Yongin-Si Gyeonggi-do 17084 (KR)
(74) Representative: Gulde & Partner
(86) International application number: PCT/KR2024/010516
(87) International publication number: WO 2025/023662

(57) **Abstract**

A battery pack includes a battery cell and a protection circuit module connected to the battery cell, wherein the battery cell includes an electrode assembly and an electrode tab extending from the electrode assembly, wherein the protection circuit module includes a substrate and a substrate tab connected to the substrate, wherein the electrode tab includes an electrode sealing portion extending from a housing of the electrode assembly and an electrode bending portion extending from the electrode sealing portion, and wherein the substrate tab is formed to be arranged between the electrode bending portion and the substrate and formed to be in contact with the electrode bending portion and the substrate.

## Description

### Technical Field

The present disclosure relates to a battery pack.

### Background Art

Secondary batteries are batteries designed to be chargeable and dischargeable, and may be used as energy sources for mobile devices, electric vehicles, hybrid vehicles, electric bicycles, uninterruptible power supplies, etc. Secondary batteries may be used as single battery cells, depending on the types of external devices applied, or as modules or packs, in which multiple battery cells are connected and grouped into one unit.

Meanwhile, as applications using secondary batteries increasingly demand larger capacities, the size of battery cells is also increasing to increase energy density. As a result, not only is the overall length of the battery pack containing the battery cells increasing, but also the overall size of the battery pack is increasing.

### Disclosure of Invention

### Technical Problem

The overall length and overall size of the battery pack may be reduced.

### Solution to Problem

A battery pack includes a battery cell and a protection circuit module connected to the battery cell, wherein the battery cell includes an electrode assembly and an electrode tab extending from the electrode assembly, wherein the protection circuit module includes a substrate and a substrate tab connected to the substrate, wherein the electrode tab includes an electrode sealing portion extending from a housing of the electrode assembly and an electrode bending portion extending from the electrode sealing portion, and wherein the substrate tab is formed to be arranged between the electrode bending portion and the substrate and formed to be in contact with the electrode bending portion and the substrate.

The substrate tab may include a substrate connection portion connected to the substrate and a substrate bending portion extending from the substrate connection portion and bending in a direction in which the substrate is located based on the substrate connection portion.

The electrode bending portion may include a first electrode bending portion extending from the electrode sealing portion, a second electrode bending portion extending from the first electrode bending portion and bending in a direction in which the substrate is located based on the first electrode bending portion, and a third electrode bending portion extending from the second electrode bending portion and bending in a direction in which the substrate is located based on the second electrode bending portion.

The third electrode bending portion may be in contact with the substrate connection portion.

The second electrode bending portion may be in contact with the substrate bending portion.

The third electrode bending portion may be arranged between a first tape and the substrate tab.

The substrate tab and the third electrode bending portion may be stacked and arranged in a single layer between the substrate and a first tape.

A third tape may be arranged between the bent electrode sealing portion and the electrode assembly.

A fourth tape may be arranged between the bent electrode sealing portion and the substrate.

An insulating tape may be arranged between the electrode sealing portion and the electrode bending portion.

The first tape covering the electrode assembly and the protection circuit module may be included.

A thickness T1' of the first tape may be greater than a thickness T4' of the fourth tape.

A width LW3' of the substrate tab may be greater than a height LH3' of the substrate tab.

A width LW2' of the substrate may be greater than a height LH3' of the substrate.

The substrate may have a depressed portion into which a portion of the electrode tab is inserted.

The electrode bending portion of the electrode tab may include a first electrode bending portion extending from the electrode sealing portion, a second electrode bending portion extending from the first electrode bending portion and bending in a direction in which the substrate is located based on the first electrode bending portion, and a third electrode bending portion extending from the second electrode bending portion and bent in a direction in which the substrate is located based on the second electrode bending portion, and the second electrode bending portion may be inserted into the depressed portion.

The substrate tab may be inserted into the depressed portion.

The substrate tab may include a substrate connection portion connected to the substrate and a substrate bending portion extending from the substrate connection portion and bent in a direction in which the substrate is located based on the substrate connection portion, and the substrate bending portion may be inserted into the depressed portion.

The substrate may include a printed circuit board (PCB) portion and a molding portion covering an upper side of the PCB portion.

The depressed portion may be formed by depressing a side surface of the PCB portion and the molding portion of the substrate in an inner direction of the substrate.

### Advantageous Effects of Invention

The battery pack is formed in a horizontal structure by bending a terrace portion of the battery cell to reduce the overall length of the battery pack, thereby reducing the overall length and size of the battery pack and increasing the capacity of the battery pack.

### Brief Description of Drawings

FIG. 1 shows a battery pack.
FIG. 2 is an exploded perspective view of the battery pack of FIG. 1.
FIG. 3 is an exploded perspective view of a battery cell.
FIG. 4 is a diagram illustrating an assembled state of the battery cell of FIG. 3.
FIGS. 5 and 6 show cross-sections taken along line A-A' in FIG. 1.
FIG. 7 is an enlarged view of an assembled state of portion B of FIG. 2.
FIGS. 8 and 9 show cross-sections taken along line A-A' of FIG. 1, according to another embodiment of the present disclosure.
FIG. 10 shows a cross-section taken along line A-A' of FIG. 1, according to another embodiment of the present disclosure.
FIG. 11 is an exploded perspective view of a battery pack reflecting another embodiment of the present invention in FIG. 2.
FIG. 12 is an enlarged view of an assembled state of portion C of FIG. 11.
FIGS. 13, 14, and 15 show cross-sections taken along line A-A' of FIG. 1, according to another embodiment of the present disclosure.

### Best Mode for Carrying out the Invention

### Mode for the Invention

Embodiments of the present disclosure and a corresponding method may be understood with reference to the detailed description and drawings of the embodiments. The described embodiments have various modifications and may be implemented in different forms, and are not limited to the embodiments described herein. In addition, some or all of the features of various embodiments of the present disclosure may be combined with each other. Each of the embodiments may be implemented independently of each other or in association with each other. The described embodiments are provided by way of examples to enable the present disclosure to be complete, and are intended to fully convey the idea of the present disclosure to those of ordinary skill in the art to which the present disclosure pertains. The present disclosure may be modified or replaced with equivalent substitutions within the spirit and technical scope of the present disclosure. Thus, processes, elements, and techniques not required by ordinary technicians for a complete understanding of embodiments of the present disclosure may not be described.

Unless otherwise stated throughout the accompanying drawings and specification, the same reference numerals, letters, or combinations thereof indicate the same components, and thus redundant descriptions are omitted. In addition, in order to clearly explain the present disclosure, portions not related to the description are omitted.

The relative sizes of elements, layers, and areas in the drawings may be exaggerated for clarity. The use of hatching and/or shading in the accompanying drawings are generally provided to clarify the boundaries between adjacent elements. Thus, the presence or absence of hatching or shading does not represent a particular material, material properties, dimensions, ratios, commonalities between illustrated elements and/or other characteristics of an undesignated element, properties, and preferred forms or requirements with respect to properties, etc.

Various embodiments are described herein with reference to cross-sectional examples that are schematic examples of embodiments and/or intermediate structures. Thus, for example, the appearance of a drawing may vary as a result of manufacturing techniques and/or tolerances. Furthermore, the specific structural or functional description disclosed herein is merely an example for explaining an embodiment according to the concept of the present disclosure. Therefore, embodiments disclosed in the present specification should not be construed as being limited to the shape of an illustrated area, and include, for example, variations in the shape according to manufacturing.

The area shown in the drawing is schematic and its shape is not intended to illustrate the actual shape of the device area and is not intended to be limited thereto. In addition, as recognized by those skilled in the art, the described embodiments may be modified in various ways to the extent that they do not deviate from the spirit or scope of the present disclosure.

Several specific details are presented herein to provide a complete understanding of various embodiments. However, various embodiments may be implemented without these specific details or including one or more details. Well-known structures and devices are shown in block diagram form to avoid unnecessarily obscuring various embodiments.

In order to easily describe the relationship between elements or features illustrated in the drawing and other elements or features, spatially relative terms such as "below," "up," "lower," "upper," and the like may be used in the present specification. The spatially relative terms are intended to include various directions of the device in use or operation in addition to the directions shown in the drawing. For example, if the device in the figures is turned over, elements described as "below," "beneath," "or "under" other elements or features would then be oriented "above" the other elements or features. Thus, as illustrative terms, "down" and "lower portion" may include both up and down directions. The device may be oriented in a different direction (e.g., 90° rotation or another direction), and the spatially relative description used herein should be interpreted accordingly. Likewise, when it is stated that a first portion is positioned "above" a second portion, this means that the first portion is positioned above or below the second portion.

In addition, the expression "viewed from a plane" refers to a view of an object from above, and the expression "in a schematic cross-section view" refers to a schematic cross-section taken by cutting the object vertically. The expression "as viewed from the side" means that a first object may be above, below, or on the side of a second object and vice versa. Additionally, the term "overlapping" may include layering, stacking, facing, extending over, covering, or partially covering or any other suitable term as would be appreciated and understood by those of ordinary skill in the art. The expression "non-overlapping" may include meanings such as "apart from" or "separated from" and any other suitable equivalent expressions recognized and understood by one of ordinary skill in the art. The terms "face" and "surface" may mean that a first object may directly or indirectly face a second object. When there is a third object between the first object and the second object, it may be understood that the first object and the second object face each other but indirectly face each other.

When an element, layer, region, or component is referred to as being "formed," "connected," or "coupled" to another element, it may be said to be formed directly on a layer, region, or component, formed on another component, layer, region or component, or indirectly formed on, connected to, or coupled to another component. It also may be collectively referred to direct or indirect combinations or connections of elements, layers, regions, or components and integral or non-integral combinations or connections so that one or more elements, layers, regions, or components may be present. For example, when an element, a layer, region, or component is referred to as being "electrically connected" or "electrically coupled" to another element, layer, region, or component, it may be directly electrically connected or coupled to the other element, layer, region, or component, or intervening elements, layers, regions, or components may be present. However, "directly connected to" or "directly combined with" means that one component is connected to or combined with another directly without an intermediate component, or the former is on the latter. Additionally, in the present specification, when a part of a layer, film, region, plate, etc. is formed in another part, the formation direction is not limited to an upper direction, and includes that the part is formed on a side or bottom. Conversely, when a portion of a layer, film, region, plate, etc. is formed "underneath" another portion, this includes not only the case where the portion is "directly under" the other portion, but also the case where there is still another portion between the portion and the other portion. Meanwhile, other expressions describing relationships between components such as "between," "immediately between" or "adjacent to" and "directly adjacent to" may be construed similarly. In addition, it will also be understood that when an element or layer is referred to as being "between" two elements or layers, it can be the only element or layer between the two elements or layers, or one or more intervening elements or layers may also be present.

For the purposes of the present disclosure, expressions such as "at least one" or "any one" do not limit the order of individual elements. For example, "at least one of X, Y or Z", "at least one of X, Y or Z", "at least one selected from a group of X, Y and Z" may include X alone, Y alone, Z alone, and any combination of two or more of X, Y and Z. Similarly, expressions such as "at least one of A and B" and "at least one of A or B" may include A, B, or A and B. In the present specification, the term "or" generally includes "and/or", and "and/or" includes any combination of one or more related list items. For example, expressions such as "A and/or B" may include A, B, or A and B.

Although the terms "first," "second," "third," etc. may be used herein to describe various elements, components, regions, layers, and/or cross-sections, such elements, components, regions, layers, and/or cross-sections are not limited by these terms. These terms are used to distinguish one element, component, region, layer or cross section from another element, component, region, layer or cross section. Therefore, the first element, component, region, layer or cross section described below may be referred to as the second element, component, region, layer or cross section without departing from the spirit and scope of the present disclosure. The description of an element as a "first" element may not require or imply the presence of a second element or other elements. Terms such as "first", "second", and the like may be used in the present disclosure to distinguish between different categories or sets of elements. For clarity, the terms "first", "second", etc. may represent "first category (or first set)", "second category (or second set)", etc., respectively.

The terms used herein are used only to describe particular embodiments, and are not intended to limit the present disclosure. As used in the present disclosure, a singular expression is intended to include a plural expression as well, and a plural expression is also intended to include a singular expression unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

When one or more embodiments may be implemented differently, a specific process order may be performed differently from the order described. For example, two processes described in succession may be performed substantially simultaneously, or may be performed in the opposite order to the order described.

Terms "substantially", "about", "approximately" and similar terms are used as terms of approximation, not of degree, and are intended to describe the unique variation in measured or calculated values to be recognized by a person skilled in the art. As used herein, the term "about" or "approximately" includes the stated value and means within an acceptable deviation range (e.g. a deviation range due to limitation of the measurement system) for a particular value determined by a person skilled in the art in view of that measurement and related errors. For example, "about" could mean within one or more standard deviations, or within ±30 %, ±20 %, ±10%, or ±5 % of a specified value.

Unless otherwise defined, all terms used herein, including technical or scientific terms, have the same meaning as those generally understood by those of ordinary skill in the technical field to which the present disclosure belongs. Terms such as commonly used dictionary-defined terms shall be construed as having meaning consistent with their meaning in the context of the relevant technology and/or the present disclosure, and shall not be idealized or interpreted in an overly formal sense unless explicitly defined herein.

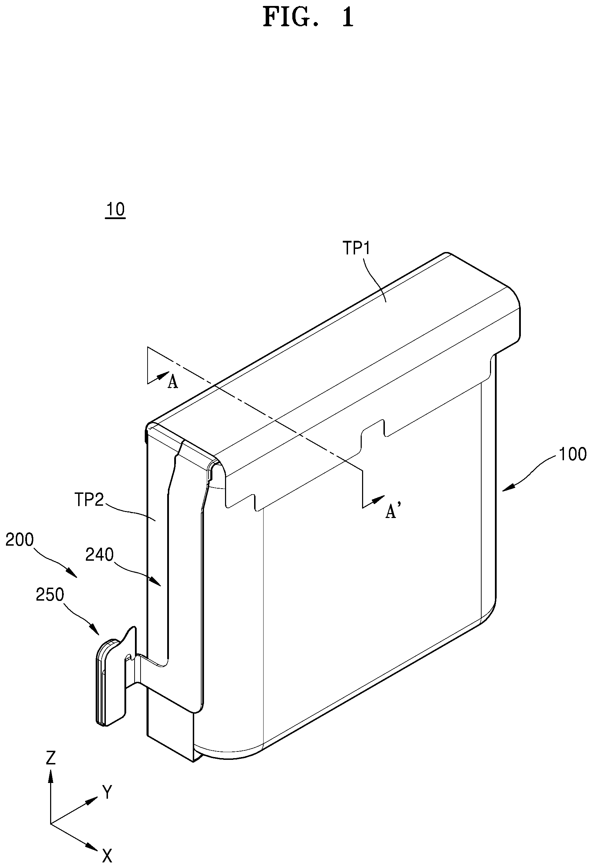

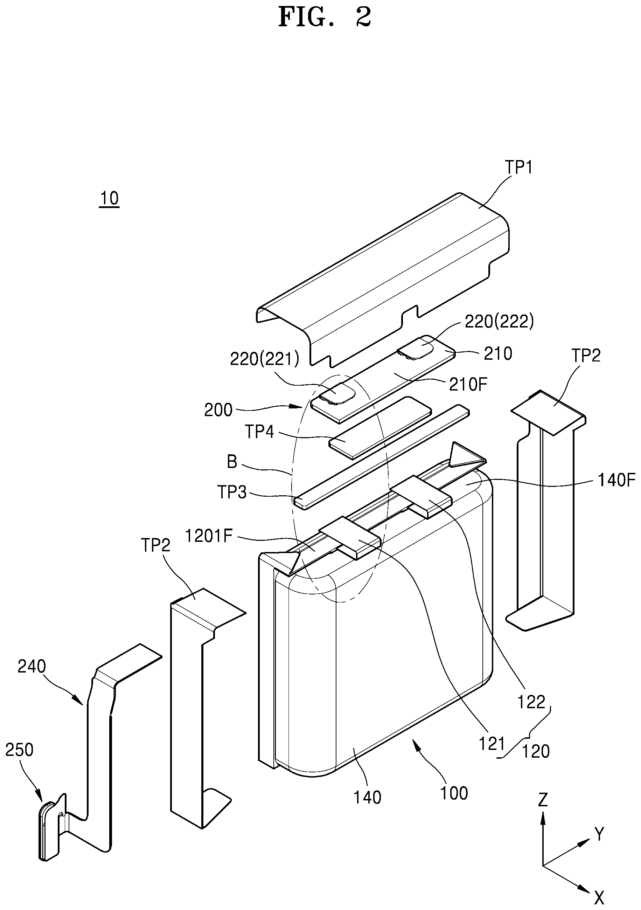

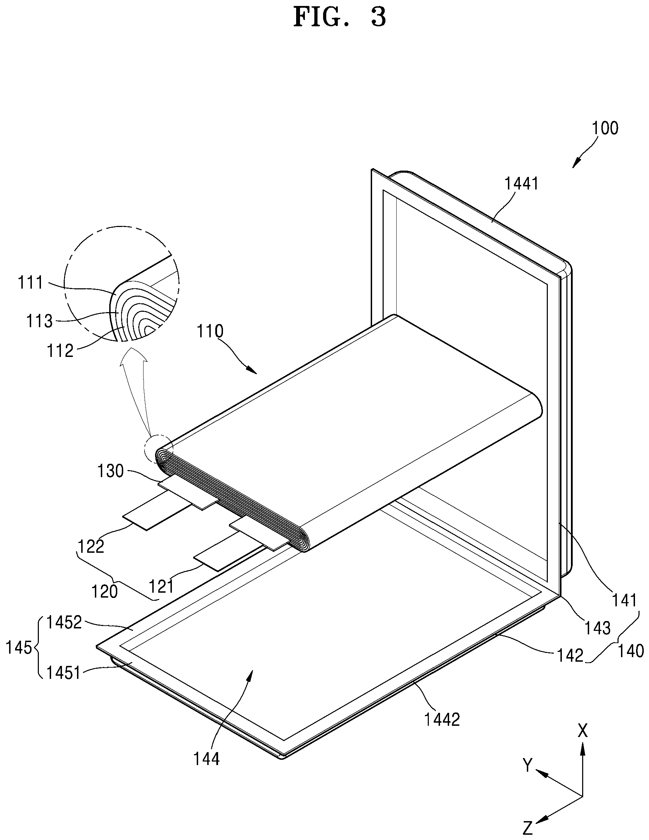

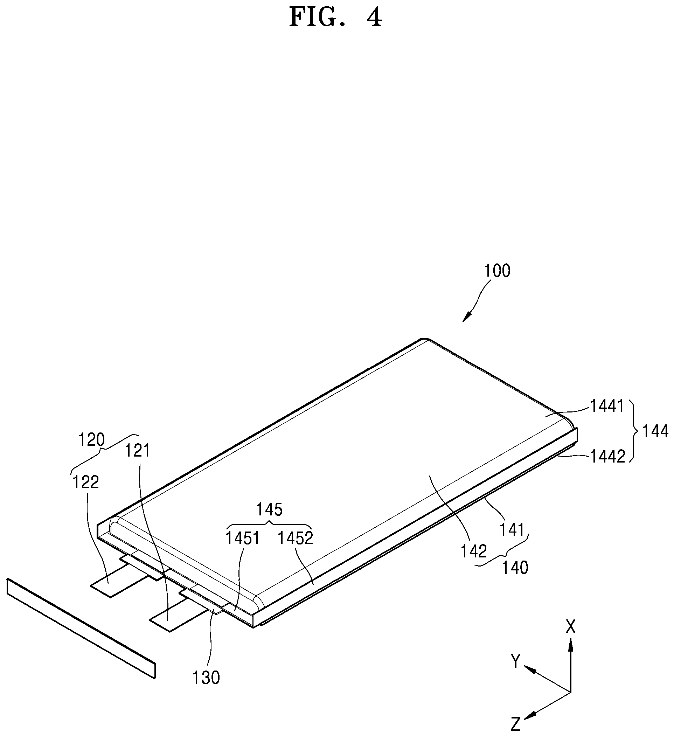

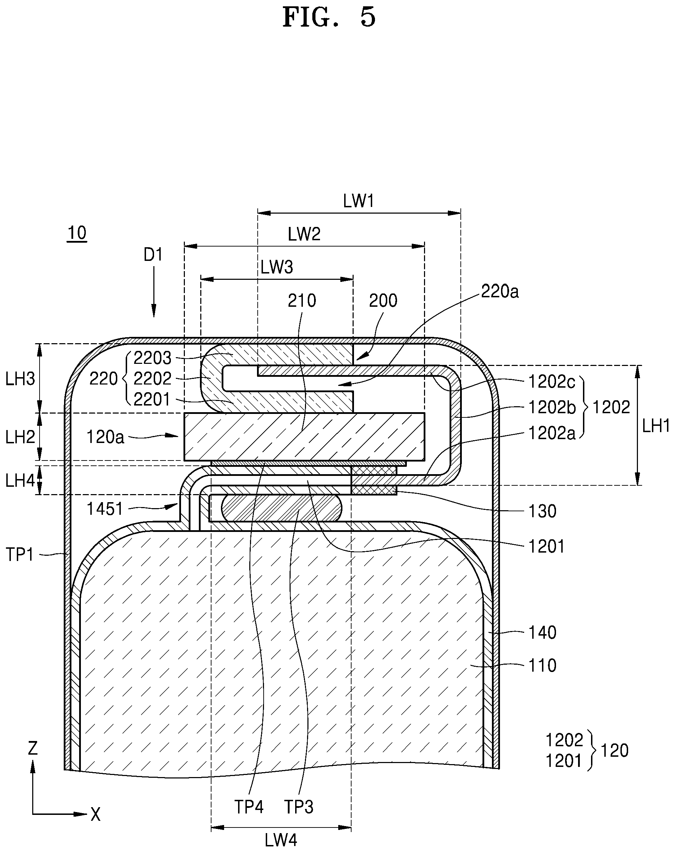

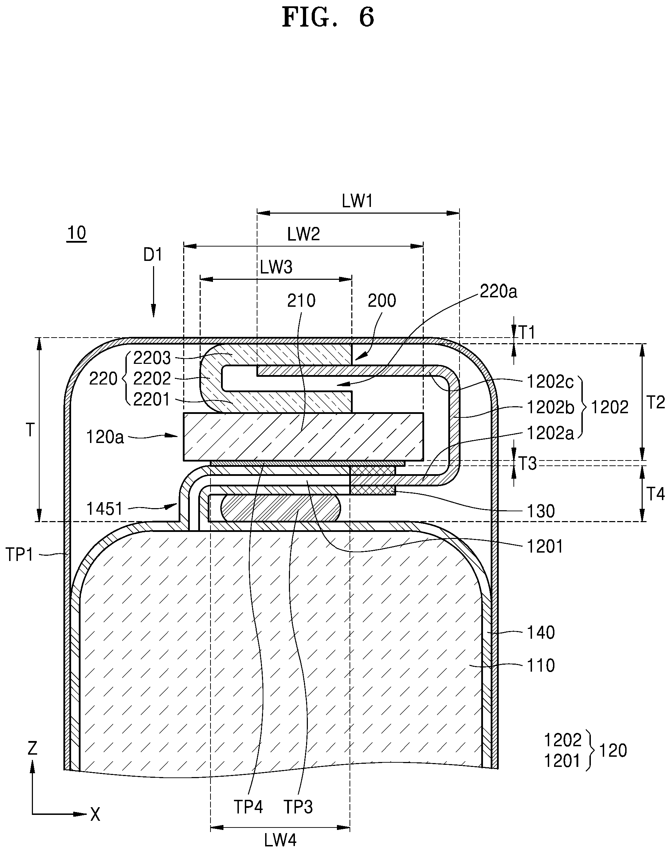

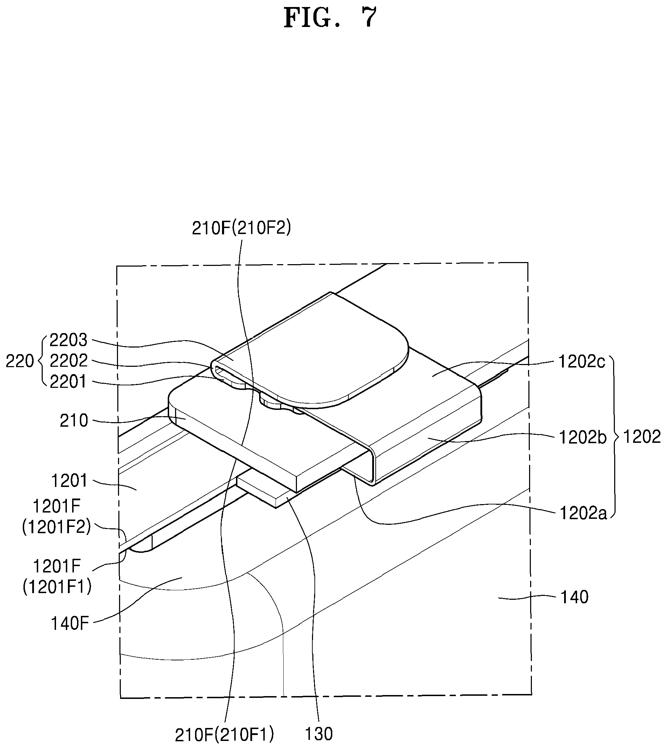

FIG. 1 shows a battery pack. FIG. 2 is an exploded perspective view of the battery pack of FIG. 1. FIG. 3 is an exploded perspective view of a battery cell. FIG. 4 is a diagram illustrating an assembled state of the battery cell of FIG. 3. FIGS. 5 and 6 show cross-sections taken along line A-A' in FIG. 1. FIG. 7 is an enlarged view of an assembled state of portion B of FIG. 2.

A battery pack 10 is a pouch type battery, and may include a battery cell 100 and a protection circuit module 200. For example, as shown in FIG. 1, the battery pack 10 may have a front surface and a rear surface having a flat and even shape (e.g., both surfaces parallel to the Y-Z plane of FIG. 1). At least a portion of the battery pack 10 may have a curved shape. For example, both side surfaces of the battery pack 10 (for example, a surface where an extension portion 240 is located and an opposite surface thereof in FIG. 1) may have a curved shape. The battery pack 10 may have a dimension in which a length in a thickness direction (e.g., an X-axis direction in FIG. 1) is less than a length in a width direction (e.g., a Y-axis direction in FIG. 1).

The battery pack 10 includes a battery cell 100 and a protection circuit module 200 connected to the battery cell 100 and including a substrate 210, the battery cell 100 includes an electrode assembly 110 and a housing 140 surrounding the electrode assembly 110, and the housing 140 includes a terrace portion 1451 corresponding to the short side portion of the battery cell 100, and a pair of side sealing portions 1452 respectively connected to both ends of the terrace portion 1451 and corresponding to a pair of long side portions of the battery cell 100.

The battery pack 10 may include one or more tapes for supporting and protecting the battery cell 100 and the protection circuit module 200. The one or more tapes are attached on at least one of the battery cell 100 and the protection circuit module 200 and may include an insulating material. For example, the one or more tapes may be on the outer surface of the battery cell 100, between the battery cell 100 and the protection circuit module 200, or inside the protection circuit module 200. The tapes may be a component distinguished from an insulating tape 130 of the battery cell 100.

The battery cell 100 may include an electrode assembly 110, an electrode tab 120, the insulating tape 130, and the housing 140.

The electrode assembly 110 may include a first electrode plate 111 and a second electrode plate 112 having opposite polarities to each other, and a separator 113 between the first electrode plate 111 and the second electrode plate 112. The electrode assembly 110 may be formed in a roll type by rolling the first electrode plate 111, the second electrode plate 112, and the separator 113. For example, in the electrode assembly 110, a winding axis (e.g., a central axis rolled by the first electrode plate 111, the second electrode plate 112, and the separator 113) may be parallel to a longitudinal direction (e.g., a Z-axis direction of FIG. 5) of the battery cell 100. Alternatively, the electrode assembly 110 may be formed by stacking a plurality of first electrode plates 111, second electrode plates 112, and separators 113. Alternatively, the electrode assembly 110 may include a mixture of a roll type and a stack type. The first electrode plate 111 may be a negative electrode, and the second electrode plate 112 may be a positive electrode. Alternatively, the first electrode plate 111 may be a positive electrode, and the second electrode plate 112 may be a negative electrode.

The first electrode plate 111 may be formed by applying a first electrode active material such as graphite or carbon to a first electrode current collecting plate formed of a metal foil such as copper, a copper alloy, nickel, or a nickel alloy. The first electrode plate 111 may include a first uncoated portion, which is a region where the first electrode active material is not applied, and at least a portion of the first uncoated portion may include a first electrode tab 121. The first electrode tab 121 may be a path for a current flow between the first electrode plate 111 and a first current collector. When manufacturing the first electrode plate 111, the first electrode tab 121 may be formed by a cutting process so that at least a portion of the first electrode plate 111 protrudes to the outside of the electrode assembly 110 in advance. Alternatively, without a separate cutting process, the first electrode tab 121 may further protrude to the outside of the electrode assembly 110 than the separator 113.

The second electrode plate 112 may be formed by applying a second electrode active material such as a transition metal oxide to a second electrode current collector plate formed of a metal foil such as aluminum or an aluminum alloy. The second electrode plate 112 may include a second uncoated portion, which is a region where the second electrode active material is not applied, and at least a portion of the second uncoated portion may include a second electrode tab 122. The second electrode tab 122 may be a path for a current flow between the second electrode plate 112 and a second current collector. When manufacturing the second electrode plate 112, the second electrode tab 122 may be formed by a cutting process so that at least a portion of the second electrode plate 112 protrudes to the outside of the electrode assembly 110 in advance. Alternatively, without a separate cutting process, the second electrode tab 122 may further protrude to the outside of the electrode assembly 110 than the separator 113.

The electrode assembly 110 may be surrounded by the housing 140. For example, as shown in FIG. 3, the electrode assembly 110 has a size smaller than the housing 140 and may be accommodated in the housing 140. When the electrode assembly 110 is accommodated in the housing 140, the electrode tab 120 connected to the electrode assembly 110 may protrude to the outside of the housing 140 to be connected to the protection circuit module 200.

The electrode tab 120 may be connected to the electrode assembly 110. One end of the electrode tab 120 may extend from the electrode assembly 110. The electrode tab 120 may be drawn out from the terrace portion 1451 of the housing 140 in a state in which the housing 140 is coupled (e.g., in which the first housing 141 and the second housing 142 are in contact with each other). For example, as shown in FIG. 5, the electrode tab 120 may include a first electrode tab 121 and a second electrode tab 122 having different polarities, and the first electrode tab 121 and the second electrode tab 122 may be electrically connected to the first electrode plate 111 and the second electrode plate 112, respectively. In addition, the electrode tab 120 may be connected to a substrate tab 220. For example, the first electrode tab 121 may be connected to a first substrate tab 221, and the second electrode tab 122 may be connected to a second substrate tab 222. The electrode tab 120 may be connected to the substrate tab 220 through welding, bolting, or the like. The electrode tab 120 may include a conductive material such as a metal. The first electrode tab 121 and the second electrode tab 122 are spaced apart from each other, and the first current collector and the second current collector may be welded and connected to the first electrode tab 121 and the second electrode tab 122, respectively.

An insulating tape 130 may be attached to the electrode tab 120 to provide insulation and sealing between the electrode tab 120 and the housing 140. For example, as shown in FIG. 5, the insulating tape 130 may surround at least a portion of the electrode tab 120. The insulating tape 130 may be in contact with the electrode assembly 110 or may be adjacent to the electrode assembly 110. For example, as shown in FIG. 4, the insulating tape 130 may be located outside the terrace portion 1451.

The electrode tab 120 may be bent one or more times. In a state of being connected to the substrate tab 220 of the protection circuit module 200, the electrode tab 120 may not extend straight in a length direction (e.g., the Z-axis direction of FIG. 1) of the battery cell 100 and may be bent one or more times. For example, as shown in FIGS. 2 and 5, the electrode tab 120 may extend straight in a length direction of the battery cell 100 and then may be bent in a thickness direction (for example, an X-axis direction of FIG. 2) of the battery cell 100. Here, the terrace portion 1451 may also be bent in the same direction as the electrode tab 120. While the electrode tab 120 is bent, a fourth tape TP4 and the protection circuit module 200 may be sequentially positioned thereon. In addition, the electrode tab 120 may be bent again toward the substrate tab 220 in a thickness direction of the battery cell 100. That is, the electrode tab 120 includes a plurality of bending portions, and at least a portion of the protection circuit module 200 such as the substrate 210 may be present between the plurality of bending portions. Since the electrode tab 120 includes the bending portions, the overall length of the battery cell 100 and the battery pack 10 may be reduced.

The electrode tab 120 may include an electrode sealing portion 1201 and an electrode bending portion 1202. The electrode bending portion 1202 may include a first electrode bending portion 1202a, a second electrode bending portion 1202b, and a third electrode bending portion 1202c.

The electrode tab 120 may include: the electrode sealing portion 1201 extending from the electrode assembly 110 in a longitudinal direction of the battery cell 100 and present in the terrace portion 1451; the first electrode bending portion 1202a bent at the end of the electrode sealing portion 1201 and having a portion present in the terrace portion 1451; the second electrode bending portion 1202b bent at the end of the first electrode bending portion 1202a; and the third electrode bending portion 1202c bent at the end of the second electrode bending portion 1202b.

The electrode sealing portion 1201 may be a portion where the electrode tab 120 extends from the electrode assembly 110. For example, as shown in FIG. 5, the electrode sealing portion 1201 extends from the electrode assembly 110 and is inserted between the terrace portions 1451, and may extend in a longitudinal direction (for example, an X-axis direction of FIG. 5) of the battery cell 100.

The first electrode bending portion 1202a may extend in a direction parallel to the direction in which the electrode sealing portion 1201 extends from the end of the electrode sealing portion 1201. For example, the first electrode bending portion 1202 may extend in a thickness direction of the battery cell 100 (e.g., the X-axis direction of FIG. 5) from the end of the electrode sealing portion 1201. For example, the first electrode bending portion 1202a may extend parallel to the electrode sealing portion 1201. The fourth tape TP4 may be arranged on the first electrode bending portion 1202a (in the Z-axis direction of FIG. 5). A portion of the first electrode bending portion 1202a may be in the terrace portion 1451, and the first electrode bending portion 1202a may be surrounded by the insulating tape 130. Another portion of the first electrode bending portion 1202a may be exposed to the outside of the terrace portion 1451 and the insulating tape 130. The first electrode bending portion 1202a may be spaced apart from a top surface of the housing 140 by the length of the portion before bending of the electrode sealing portion 1201. A third tape TP3 may be provided in a space between the first electrode bending portion 1202a and the housing 140.

The second electrode bending portion 1202b may extend from the end of the first electrode bending portion 1202a in a direction crossing the direction in which the first electrode bending portion 1202a extends. For example, the second electrode bending portion 1202b may be bent at an end portion (e.g., the right end portion of FIG. 5) of the first electrode bending portion 1202a to extend in a longitudinal direction (e.g., the Z-axis direction of FIG. 5) of the battery cell 100. For example, the second electrode bending portion 1202b may extend perpendicularly to the first electrode bending portion 1202a. A length of the second electrode bending portion 1202b may be less than a length of the electrode sealing portion 1201.

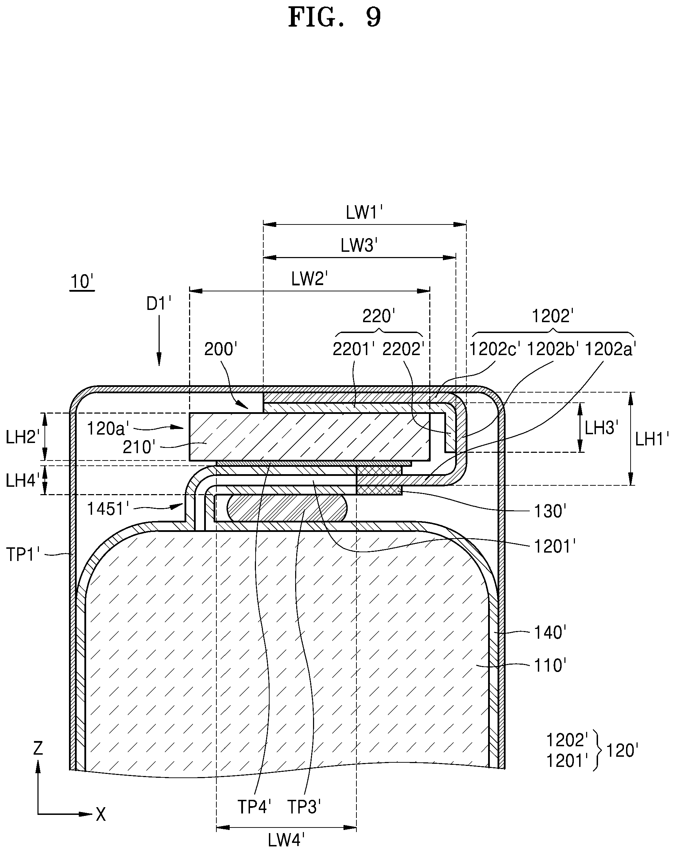

The second electrode bending portion 1202b may be located between the substrate 210 and the side surface of the first tape TP1 in a width direction (e.g., the X-axis direction of FIG. 9) of the battery pack 10. The second electrode bending portion 1202b may be spaced apart from each of the side surfaces of the substrate 210 and the first tape TP1, so as not to interfere with the substrate 210 and the first tape TP1 even when an external impact is applied thereto. The second electrode bending portion 1202b may be located between a top surface of the battery cell 100 and a top surface of the first tape TP1 in a longitudinal direction (e.g., the Z-axis direction of FIG. 5) of the battery pack 10. The second electrode bending portion 1202b may be spaced apart from each of a top surface of the battery cell 100 and a top surface of the first tape TP1, so as not to interfere with the battery cell 100 and the first tape TP1 even when an external impact is applied thereto.

The third electrode bending portion 1202c may extend from the end of the second electrode bending portion 1202b in a direction crossing the direction in which the second electrode bending portion 1202b extends. For example, the third electrode bending portion 1202c may be bent at the top end of the second electrode bending portion 1202b to extend in the thickness direction of the battery cell 100. For example, the third electrode bending portion 1202c may extend perpendicularly to the second electrode bending portion 1202b. The third electrode bending portion 1202c may be bent from the second electrode bending portion 1202b toward the first electrode bending portion 1202a. At least a portion of the first electrode bending portion 1202b and the third electrode bending portion 1202c may overlap each other in the longitudinal direction of the battery cell 100. The third electrode bending portion 1202c may be arranged on the substrate 210 of the protection circuit module 200.

The third electrode bending portion 1202c may be connected to the substrate tab 220. At least a portion of the third electrode bending portion 1202c may be inserted into the substrate tab 220 and may be in contact with the substrate tab 220. Thus, the electrode tab 120 and the substrate tab 220 may be electrically connected to each other.

The first electrode bending portion 1202a and the third electrode bending portion 1202c are spaced apart from each other, and at least a portion of the protection circuit module 200 and a tape may be arranged therebetween. For example, the first electrode bending portion 1202a and the third electrode bending portion 1202c extend parallel to each other (e.g., in the thickness direction of the battery cell 100 or in the X-axis direction of FIG. 5) and may be spaced apart from each other by the length of the second electrode bending portion 1202b. In addition, the fourth tape TP4, the substrate 210, and a portion of the substrate tab 220 (for example, a substrate connection portion 2201) between the first electrode bending portion 1202a and the third electrode bending portion 1202c, which are spaced apart from each other.

Since the electrode tab 120 includes one or more bending portions, dimensions of the battery cell 100 and the battery pack 10 in the longitudinal direction may be reduced. In addition, the protection circuit module 200 and the tape are located in a space formed between the plurality of bending portions of the electrode tab 120, so that the configuration of the battery pack 10 may be focused in a relatively small space.

Although only the first electrode tab 121 is illustrated in the drawings, the second electrode tab 122 may also have the same bending structure as the first electrode tab 121 and the same connection structure with the substrate tab 220 as the first electrode tab 121. That is, the second electrode tab 122 may also include an electrode sealing portion 1201, a first electrode bending portion 1202a, a second electrode bending portion 1202b, and a third electrode bending portion 1202c.

Referring to FIG. 3, the housing 140 may include a flexible material. The housing 140 may include an insulating layer formed on either surface of a thin metal layer such as aluminum, and may be formed through a forming process such as drawing. The housing 140 accommodates the electrode assembly 110 therein, and the edge of the housing 140 may be sealed so that external foreign materials, etc. do not flow into the electrode assembly 110.

The housing 140 may include a first housing 141, a second housing 142, a folding portion 143, an inner space 144, and a sealing portion 145.

Each of the first housing 141 and the second housing 142 accommodates the electrode assembly 110 therein, and may be folded with respect to each other around the folding portion 143. The first housing 141 may include a first inner space 1441, and the second housing 142 may include a second inner space 1442. The first housing 141 and the second housing 142 may be connected to each other through the folding portion 143. When the electrode assembly 110 is accommodated in one of the two housings, the other housing covers the housing, forming an internal space 144 in which the electrode assembly 110 is accommodated. For example, the folding portion 143 may be adjacent to a surface opposite to a surface of the electrode assembly 110 on which the electrode tab 120 is formed.

The sealing portion 145 may be formed in each of the first housing 141 and the second housing 142. The sealing portion 145 may be formed along the outer edge of the first housing 141 and the outer edge of the second housing 142. For example, as shown in FIG. 3, the sealing portion 145 may be formed on each of a pair of long side portions of each of the first housing 141 and the second housing 142 and one short side portion of each of the first housing 141 and the second housing 142 where the folding portion 143 is not formed except for the other short side portion of each of the first housing 141 and the second housing 142 where the folding portion 143 is formed. When the first housing 141 and the second housing 142 are folded, the sealing portion 145 included in the first housing 141 and the sealing portion 145 included in the second housing 142 come into contact with each other to seal the space between the first housing 141 and the second housing 142.

The sealing portion 145 may include a terrace portion 1451 and side sealing portions 1452.

The terrace portion 1451 is a portion from which the electrode tab 120 is drawn out, and may be formed to correspond to either one of a pair of short side portions of the housing 140. For example, the terrace portion 1451 may be formed adjacent to one surface of the electrode assembly 110 from which the electrode tab 120 extends, and may be formed above the battery cell 100 in a longitudinal direction of the battery cell 100. The terrace portion 1451 may seal the first housing 141 and the second housing 142 while extending in a direction crossing the electrode tab 120. The terrace portion 1451 may surround at least a portion of the electrode tab 120. For example, as shown in FIG. 5, the terrace portion 1451 may surround a portion of the electrode tab 120 extending from the electrode assembly 110. That is, the terrace portions 1451 of the first housing 141 and the second housing 142 are in contact with each other, and the electrode sealing portion 1201 and the first electrode bending portion 1202a of the electrode tab 120 may pass between the contact surfaces between the terrace portions 1451. The electrode tab 120 may be firmly supported by the terrace portion 1451.

Referring to FIGS. 3 and 4, the side sealing portions 1452 may extend in a direction crossing the terrace portion 1451. For example, the side sealing portions 1452 may be formed to correspond to a pair of long side portions of the housing 140, respectively. Each of the side sealing portions 1452 may be connected to an end of the terrace portion 1451 and an end of the folding portion 143. The terrace portion 1451 and the pair of side sealing portions 1452 may vertically cross each other.

The terrace portion 1451 and the side sealing portion 1452 may be folded For example, as shown in FIG. 4, when the first housing 141 and the second housing 142 are folded, the side sealing portions 1452 formed on a pair of long side portions of the battery cell 100 may be folded upward (e.g., in the X-axis direction of FIG. 4). In a state in which a pair of side sealing portions 1452 are folded, the terrace portion 1451 may be also folded upward. That is, after the pair of side sealing portions 1425 are folded upward toward both side surfaces of the battery cell 100, the terrace portions 1451 may be folded toward either surface of the battery cell 100 with the electrode tab 120.

Referring back to FIG. 3, the protection circuit module 200 may control charging and discharging operations of the battery cell 100 to prevent overdischarge and overcharge of the battery cell 100. The protection circuit module 200 may be connected to the battery cell 100 through the electrode tab 120. The protection circuit module 200 is on the upper portion of the battery cell 100 and may not be in direct contact with the other portion of the battery pack 10 due to tapes.

The protection circuit module 200 may include a substrate 210, a substrate tab 220, an extension portion 240, and a connector 250.

The substrate 210 supports other components (e.g., the substrate tab 220, the extension portion 240, etc.) of the protection circuit module 200, and may include circuit patterns and components. The substrate 210 may be a printed circuit board (PCB) or a flexible PCB (FPCB) and may be arranged on the battery cell 100. For example, as shown in FIG. 5, the substrate 210 may be between the fourth tape TP4 and the substrate tab 220. The substrate 210 may have a rectangular shape extending in a width direction (e.g., a Y-axis direction of FIG. 2) of the battery cell 100.

At least one substrate tab 220 may be positioned on the substrate 210 and connected to the electrode tab 120. The at least one substrate tab 220 includes a conductor that may be electrically connected to the electrode tab 120, and may include, for example, nickel, copper, aluminum, or the like.

For example, as shown in FIG. 2, two substrate tabs 220 may be located on the top surface of the substrate 210 and may be spaced apart from each other. The number of substrate tabs 220 may be the same as the number of electrode tabs 120. The substrate tab 220 may be at a position corresponding to the electrode tab 120 and may be connected to the electrode tab 120 through welding or the like to electrically connect the battery cell 100 to the protection circuit module 200. The substrate tab 220 may include a first substrate tab 221 connected to the first electrode tab 121 and a second substrate tab 222 connected to the second electrode tab 122.

The substrate tab 220 may include a plurality of bending portions. For example, the substrate tab 220 may include a substrate connection portion 2201, a first substrate bending portion 2202, and a second substrate bending portion 2203. For example, as shown in FIG. 5, the substrate connection portion 2201 is located on a top surface of the substrate 210 and may extend in a width direction of the substrate 210 (or a thickness direction of the battery cell 100 or the X-axis direction of FIG. 5). The substrate connection portion 2201 may extend in a direction opposite to a direction in which the first substrate bending portion 2202 extends.

The first substrate bending portion 2202 is bent at an end portion of the substrate connection portion 2201 and may extend in a direction different from that of the substrate connection portion 2201. For example, the first substrate bending portion 2202 may extend in a height direction of the battery cell 100 (e.g., the Z-axis direction of FIG. 5). The first substrate bending portion 2202 may be located on the substrate 210. The substrate connection portion 2201 and the second substrate bending portion 2203 are spaced apart from each other by the first substrate bending portion 2202, and the electrode tab 120 may be inserted therebetween.

The second substrate bending portion 2203 is bent at an end portion of the first substrate bending portion 2202 and may extend in a direction different from that of the first substrate bending portion 2202. For example, the second substrate bending portion 2203 may extend in a thickness direction of the battery cell 100 (e.g., the Z-axis direction of FIG. 5). At least a portion of the second substrate bending portion 2203 may overlap the substrate connection portion 2201 in a height direction of the battery cell 100. The second substrate bending portion 2203 may be connected to the electrode tab 120. For example, as shown in FIG. 5, a bottom surface of the second substrate bending portion 2203 is in contact with a top surface of the third electrode bending portion 1202c, so that the electrode tab 120 and the substrate tab 220 may be connected to each other.

Although only the first substrate tab 221 is shown in the drawings, the second substrate tab 222 may also have the same bending structure as the second substrate tab 221 and the same connection structure with the substrate tab 220 as the second substrate tab 221. That is, the second substrate tab 222 may also include a substrate connection portion 2201, a first substrate bending portion 2202, and a second substrate bending portion 2203.

The extension portion 240 may connect the substrate 210 to the connector 250. For example, the extension portion 240 may have one end being in contact with a top surface of the substrate 210 and the other end connected to the connector 250. The extension portion 240 may have a width equal to or less than that of the protection circuit module 200, and may include a flexible material that may be deformed. The extension portion 240 extends downward along the side surface of the battery cell 100, and the connector 250 may be positioned at an end portion thereof. The connector 250 may connect the protection circuit module 200 to an external device of the battery pack 10, such as an application or a controller.

The battery pack 10 may include tapes. The tapes may be positioned between the battery cell 100 and the protection circuit module 200 or outside the battery cell 100 and/or the protection circuit module 200. The tapes may be attached to at least one of the battery cell 100 and the protection circuit module 200. The tapes insulate the battery cell 100 and the protection circuit module 200 from each other and protects the battery cell 100 and the protection circuit module 200 from external impact. The tapes include an insulating and/or flame-retardant material, and may include, for example, Teflon. The tapes may include a first tape TP1, a second tape TP2, a third tape TP3, and a fourth tape TP4.

The second tape TP2 may be attached to both side surfaces of the battery cell 100. For example, as shown in FIG. 1, the second tape TP2 may be between the extension portion 240 of the protection circuit module 200 and the battery cell 100. The second tape TP2 may prevent the extension portion 240 from being in direct contact with the battery cell 100. The upper portion of the second tape TP2 may be positioned on a top surface of the battery cell 100, and the lower portion of the second tape TP2 may be positioned on a bottom surface of the battery cell 100. A pair of second tapes TP2 may be attached to both sides of the battery cell 100, respectively, and may cover a pair of corner portions of the battery cell 100, respectively.

The second tape TP2 may cover the sealing portion 145. For example, while the side sealing portion 1452 is folded, the second tape TP2 may cover the outer side of the side sealing portion 1452.

The first tape TP1 may be positioned above the battery cell 100 to cover the protection circuit module 200 and the battery cell 100. For example, as shown in FIG. 1, the first tape TP1 is positioned on the protection circuit module 200 while the battery cell 100 and the protection circuit module 200 are connected to each other, and may cover upper portions of the front surface and the rear surface of the battery cell 100. Therefore, as shown in FIG. 5, the first tape TP1 may be positioned in a form surrounding the protection circuit module 200 and the electrode tab 120 in addition to components. The first tape TP1 may be spaced apart from the protection circuit module 200 in a state of being attached to the battery cell 100.

The third tape TP3 may be positioned at a top end of the battery cell 100 before the electrode tab 120 and the terrace portion 1451 are folded so that the top end of the battery cell 100 and the electrode tab 120 are not in direct contact with each other. For example, as shown in FIG. 5, the third tape TP3 may have a length corresponding to a width (for example, a Y-axis direction of FIG. 2) of the battery cell 100 and may be positioned at a top end of the battery cell 100. In this state, the electrode tab 120 and the terrace portion 1451 may be folded toward the top surface of the housing 140 (e.g., the first housing 141), and the side sealing portions 1452 on both sides may also be folded inward.

The fourth tape TP4 may be positioned on the electrode tab 120 and/or the insulating tape 130. For example, as shown in FIG. 5, the fourth tape TP4 may be positioned thereon while the electrode tab 120 and the terrace portion 1451 are bent. The fourth tape TP4 covers a portion of the electrode tab 120, the terrace portion 1451 and the insulating tape 130, and the side sealing portions 1452 positioned at both sides thereof, thereby securing airtightness and insulation between components.

According to this embodiment, referring to FIG. 7, the electrode sealing portion 1201 is bent between the substrate 210 and the housing 140 so that a first sealing surface 1201F1 of the electrode sealing portion 120 corresponds to a housing surface 140F of the housing 140. In addition, the substrate 210 is arranged such that a substrate surface 210F of the substrate corresponds to a second sealing surface 1201F2 of the electrode sealing portion 1201.

As described above, the electrode sealing portion 1201 is bent in a direction in which the housing surface 140F of the housing 140 is positioned, thereby reducing a thickness T occupied by the electrode tab and the protective circuit module of FIG. 6 compared to the case where the electrode sealing portion 1201 is not bent and extends perpendicularly to the housing surface 140F of the housing 140. Accordingly, the volume occupied by the electrode tab and the protection circuit module of the entire battery pack may be reduced, thereby reducing the overall length and size of the battery pack. At the same time, the volume of the electrode assembly may be increased relative to the same size, thereby increasing the capacity of the battery pack.

In addition, the substrate surface 210F of the substrate is arranged to correspond to the second sealing surface 1201F2 of the electrode sealing portion 1201, so that the substrate 210 is arranged on the opposite side of the housing 140 based on the bent electrode tab 120 rather than between the electrode tab 120 and the housing 140, thereby completely blocking the possibility of reducing battery efficiency, which may be caused by unnecessary electrical connection between the substrate 210 and the housing 140.

According to the present embodiment, the substrate 210 includes a first substrate surface 210F1 arranged to correspond to the second sealing surface 1201F2 of the electrode sealing portion 1201, and a second substrate surface 210F2 formed on the opposite side of the first substrate surface 210F1, and the second substrate surface 210F2 may be connected to the substrate tab 220. The substrate 210 may face the electrode sealing portion 1201 through the first substrate surface 210F1 and simultaneously cover the electrode sealing portion 1201 in a first direction D1. In addition, the substrate 210 may be in contact with the substrate tab 220 through the second substrate surface 210F2, thereby being electrically connected to the substrate tab.

In this case, a second space portion 220a is formed in the substrate tab 220, and an end of the electrode bending portion 1202 may be arranged in the second space portion 220a to be connected to the substrate tab 220.

More specifically, the substrate tab 220 includes a substrate connection portion 2201 connected to the substrate 210, a first substrate bending portion 2202 that extends from the substrate connection portion 2201 and is bent in a direction in which the substrate is located based on the substrate connection portion 2201, a second substrate bending portion 2203 that extends from the first substrate bending portion 2202 and is bent in the direction where the substrate is located based on the first substrate bending portion 2202. In this case, the substrate connection portion 2201 and the second substrate bending portion 2203 are arranged to face each other, and a second space portion 220a may be formed between the substrate connection portion 2201 and the second substrate bending portion 2203.

Here, the electrode bending portion 1202 may include a first electrode bending portion 1202a extending from the electrode sealing portion 1201, a second electrode bending portion 1202b that extends from the first electrode bending portion 1202a, and is bent in a direction in which the substrate is located based on the first electrode bending portion 1202a, and a third electrode bending portion 1202c that extends from the second electrode bending portion 1202b, and is bent in the direction in which the substrate is located based on the second electrode bending portion 1202b.

In this case, the third electrode bending portion 1202c may be connected to the second substrate bending portion 2203. In addition, the electrode sealing portion 1201 and the third electrode bending portion 1202c are formed to face each other, a first space 120a is formed between the electrode sealing portion 1201 and the third electrode bending portion 1202c, and the substrate 210 may be placed on the first space 120a.

A third tape TP3 may be arranged between the bent electrode sealing portion 1201 and the housing 140. The third tape TP3 may be maintained to be adhered to the electrode sealing portion 1201 and the housing 140.

A fourth tape TP4 may be arranged between the bent electrode sealing portion 1201 and the substrate 210. The fourth tape TP4 may be maintained to be adhered to the electrode sealing portion 1201 and the substrate 210.

According to this embodiment, an insulating tape 130 formed to surround the electrode bending portion 1202 and being in contact with the electrode sealing portion 1201 may be arranged.

Accordingly, it is possible to prevent the electrode bending portion 1202 extending from the electrode sealing portion 1201 from being in contact with the substrate 210 or the housing 140 accommodating the electrode assembly 110 to prevent the electrode bending portion 1202 and the electrode assembly 110 from being electrically connected to each other.

According to the present embodiment, a first tape TP1 covering the housing 140 and the protection circuit module 200 may be included. In this case, a thickness T1 of the first tape TP1 may be greater than a thickness T3 of the fourth tape TP4. The first tape TP1 is formed to cover the electrode tab 120 and the protection circuit module 200, and may protect the electrode tab 120 and the protection circuit module 200 from external impact. Therefore, the thickness of the first tape TP1 may be greater than the thickness of the fourth tape TP4 placed between the substrate 210 and the electrode sealing portion 1201 to insulate between the two components of the substrate 210 and the electrode sealing portion 1201.

A width LW1 of the electrode tab 120 may be greater than a height LH1 of the electrode tab 120. Accordingly, a thickness T occupied by the electrode tab and the protection circuit module may be relatively further reduced, thereby contributing to compactness and capacity improvement of the battery pack.

In addition, a width LW2 of the substrate 210 may be greater than a height LH2 of the substrate 210. Accordingly, a thickness T occupied by the electrode tab and the protection circuit module may be relatively further reduced, thereby contributing to compactness and capacity improvement of the battery pack.

In addition, a width LW3 of the substrate tab 220 may be greater than a height LH3 of the substrate tab 220. Accordingly, a thickness T occupied by the electrode tab and the protection circuit module may be relatively further reduced, thereby contributing to compactness and capacity improvement of the battery pack.

A thickness T4 of the bent electrode sealing portion 1201 may be less than a thickness T2 of the substrate 210 and the substrate tab 220. The thickness T occupied by the electrode tab and the protection circuit module by bending the electrode sealing portion 1201 as much as possible to be less than the thickness T2 of the substrate 210 and the substrate tab 220, thereby contributing to compactness and capacity improvement of the battery pack.

A height LH4 of the electrode sealing portion 1201 may be greater than a width LW4 of the electrode sealing portion 1201. In addition, a width LW2 of the substrate 210 may be greater than a width LW4 of the electrode sealing portion 1201. Accordingly, the substrate 210 may completely cover the electrode sealing portion 1201 in the first direction D1 in the X-axis direction of FIG. 5, thereby preventing the electrode sealing portion 1201 from being in contact with and electrically connected to the substrate tab 220. In addition, the substrate 210 plays a role of pressing the bent electrode sealing portion 1201 in a direction in which the housing 140 is located, and thus the electrode sealing portion 1201 may have a completely fixed structure in a bent state between the substrate 210 and the housing 140.

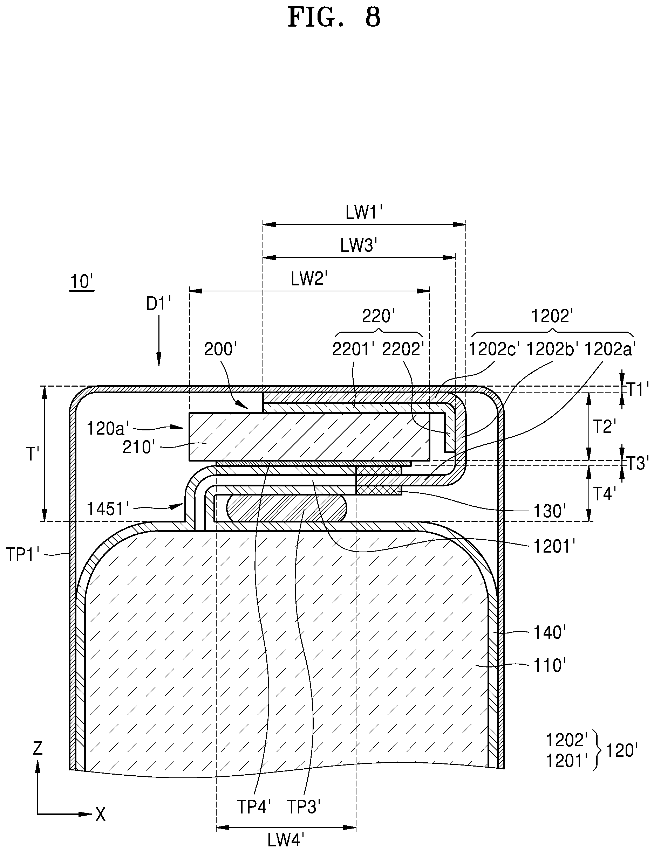

Referring to FIGS. 8 and 9, a substrate 210' of a battery pack 10' according to the present embodiment supports other components (e.g., a substrate tab 220', etc.) of a protection circuit module 200', and may include circuit patterns and components. The substrate 210' may be a printed circuit board (PCB) or a flexible PCB (FPCB) and may be arranged on a battery cell. For example, as shown in FIG. 8, the substrate 210' may be between a fourth tape TP4' and the substrate tab 220'.

At least one substrate tab 220' may be positioned on the substrate 210' and connected to an electrode tab 120'. The at least one substrate tab 220' includes a conductor that may be electrically connected to the electrode tab 120', and may include, for example, nickel, copper, aluminum, or the like.

For example, the number of substrate tabs 220' may be the same as the number of electrode tabs 120'. The substrate tab 220' may be at a position corresponding to the electrode tab 120' and may be connected to the electrode tab 120' through welding or the like to electrically connect the battery cell 100' to the protection circuit module 200'.

The substrate tab 220' may include a plurality of bending portions. For example, the substrate tab 220' may include a substrate connection portion 2201' and a substrate bending portion 2202'. For example, as shown in FIG. 8, the substrate connection portion 2201' is located on a top surface of the substrate 210' and may extend in a width direction of the substrate 210' (or a thickness direction of the battery cell or the X-axis direction of FIG. 8). The substrate connection portion 2201' may extend in a direction perpendicular to a direction in which the substrate bending portion 2202' extends.

The substrate bending portion 2202' is bent at an end portion of the substrate connection portion 2201' and may extend in a direction different from that of the substrate connection portion 2201'. For example, the substrate bending portion 2202' may extend in a height direction of the battery cell (e.g., the Z-axis direction of FIG. 8).

The substrate tab 220' may be arranged between the electrode bending portion 1202' and the substrate 210'. The substrate tab 220' may be in contact with the electrode bending portion 1202'.

The substrate tab 220' may be in contact with the substrate 210'. The substrate connection portion 2201' of the substrate tab 220' may extend in a direction parallel to a third electrode bending portion 1202c' of the electrode bending portion 1202', and the substrate connection portion 2201' may be in contact with the third electrode bending portion 1202c'. The substrate bending portion 2202' of the substrate tab 220' may extend in a direction parallel to the second electrode bending portion 1202b' of the electrode bending portion 1202', and the substrate bending portion 2202' may be in contact with the second electrode bending portion 1202b'. The substrate bending portion 2202' may be maintained to be spaced apart from a side surface portion of the substrate 210'.

The third electrode bending portion 1202c' of the electrode bending portion 1202' may be in contact with a bottom surface portion of a center portion of a first tape TP1'. The third electrode bending portion 1202c' may be arranged between the first tape TP1' and the substrate tab 220'.

As described above, according to the present embodiment, the substrate tab 220' is arranged between the electrode bending portion 1202' and the substrate 210' to be in contact with each of the electrode bending portion 1202' and the substrate 210', thereby reducing a thickness T' occupied by the electrode tab and the protection circuit module of FIG. 9. Accordingly, the volume occupied by the electrode tab and the protection circuit module of the entire battery pack may be reduced, thereby reducing the overall length and size of the battery pack. At the same time, the volume of the electrode assembly may be increased relative to the same size, thereby increasing the capacity of the battery pack.

The substrate tab 220' includes a substrate connection portion 2201' connected to the substrate 210' and a substrate bending portion 2202' extending from the substrate connection portion 2201' and bent in a direction in which the substrate is located based on the substrate connection portion 2201'.

Here, the electrode bending portion 1202' may include a first electrode bending portion 1202a' extending from the electrode sealing portion 1201, a second electrode bending portion 1202b' that extends from the first electrode bending portion 1202a', and is bent in a direction in which the substrate 210' is located based on the first electrode bending portion 1202a', and a third electrode bending portion 1202c' that extends from the second electrode bending portion 1202b', and is bent in the direction in which the substrate 210' is located based on the second electrode bending portion 1202b'.

In this case, the third electrode bending portion 1202c' may be connected to the substrate connection portion 2201'. In addition, the electrode sealing portion 1201' and the third electrode bending portion 1202c' are formed to face each other, a first space 120a' is formed between the electrode sealing portion 1201' and the third electrode bending portion 1202c', and the substrate 210' may be placed on the first space 120a'.

A third tape TP3' may be arranged between the bent electrode sealing portion 1201' and the housing 140'. The third tape TP3' may be maintained to be adhered to the electrode sealing portion 1201' and the housing 140'.

A fourth tape TP4' may be arranged between the bent electrode sealing portion 1201' and the substrate 210'. The fourth tape TP4' may be maintained to be adhered to the electrode sealing portion 1201' and the substrate 210'.

According to this embodiment, an insulating tape 130' formed to surround the electrode bending portion 1202' and being in contact with the electrode sealing portion 1201' may be arranged.

Accordingly, it is possible to prevent the electrode bending portion 1202' extending from the electrode sealing portion 1201' from being in contact with the substrate 210 or the housing 140' accommodating the electrode assembly 110' to prevent the electrode bending portion 1202' and the electrode assembly 110' from being electrically connected to each other.

According to the present embodiment, a first tape TP1' covering the housing 140' and the protection circuit module 200' may be included. In this case, a thickness T1' of the first tape TP1' may be greater than a thickness T3' of the fourth tape TP4'. The first tape TP1' is formed to cover the electrode tab 120' and the protection circuit module 200', and may protect the electrode tab 120' and the protection circuit module 200' from external impact. Therefore, the thickness of the first tape TP1' may be greater than the thickness of the fourth tape TP4' placed between the substrate 210' and the electrode sealing portion 1201' to insulate between the two components of the substrate 210' and the electrode sealing portion 1201'.

According to the present embodiment, a thickness T2' of the substrate 210', the substrate tab 220', and the third electrode bending portion 1202c' may be minimized. That is, each of the substrate 210', the substrate tab 220', and the third electrode bending portion 1202c' is formed as a single layer, and the single-layer substrate 210', the single-layer substrate tab 220', and the single-layer third electrode bending portion 1202c' are stacked on each another to form a layered structure, and a thickness T2' formed by the substrate 210', the substrate tab 220', and the third electrode bending portion 1202c' may be minimized. Accordingly, a thickness T' occupied by the electrode tab and the protection circuit module may be relatively further reduced, thereby contributing to compactness and capacity improvement of the battery pack.

Specifically, each single layer of the substrate tab 220' and the third electrode bending portion 1202c' is stacked and arranged between the substrate 210' and the first tape TP1'.

In addition, the substrate tab 220' has a width LW3' of the substrate connection portion 2201' greater than a height LH3' of the substrate bending portion 2202', thereby minimizing a height LH3' of the substrate tab 220', and the substrate bending portion 2202' is bent toward a side surface portion of the substrate 210', so that a height of the substrate bending portion 2202' is absorbed by the side surface portion of the substrate 210', thereby minimizing a height ratio of the substrate tab 220' to the total battery cell. Moreover, a thickness T' occupied by the electrode tab and the protection circuit module may be relatively further reduced, thereby contributing to compactness and capacity improvement of the battery pack.

A width LW1' of the electrode tab 120' may be greater than a height LH1' of the electrode tab 120'. Accordingly, a thickness T' occupied by the electrode tab and the protection circuit module may be relatively further reduced, thereby contributing to compactness and capacity improvement of the battery pack.

In addition, a width LW2' of the substrate 210' may be greater than a height LH2' of the substrate 210'. Accordingly, a thickness T' occupied by the electrode tab and the protection circuit module may be relatively further reduced, thereby contributing to compactness and capacity improvement of the battery pack.

In addition, a width LW3' of the substrate tab 220' may be greater than a height LH3' of the substrate tab 220'. Accordingly, a thickness T' occupied by the electrode tab and the protection circuit module may be relatively further reduced, thereby contributing to compactness and capacity improvement of the battery pack.

A height LH4' of the electrode sealing portion 1201' may be less than a width LW4' of the electrode sealing portion 1201'. In addition, a width LW2' of the substrate 210' may be greater than a width LW4' of the electrode sealing portion 1201'. Accordingly, the substrate 210' may completely cover the electrode sealing portion 1201' in the first direction D1' in the X-axis direction of FIG. 8, thereby preventing the electrode sealing portion 1201' from being in contact with and electrically connected to the substrate tab 220'. In addition, the substrate 210' plays a role of pressing the bent electrode sealing portion 1201' in a direction in which the housing 140' is located, and thus the electrode sealing portion 1201' may have a completely fixed structure in a bent state between the substrate 210' and the housing 140'.

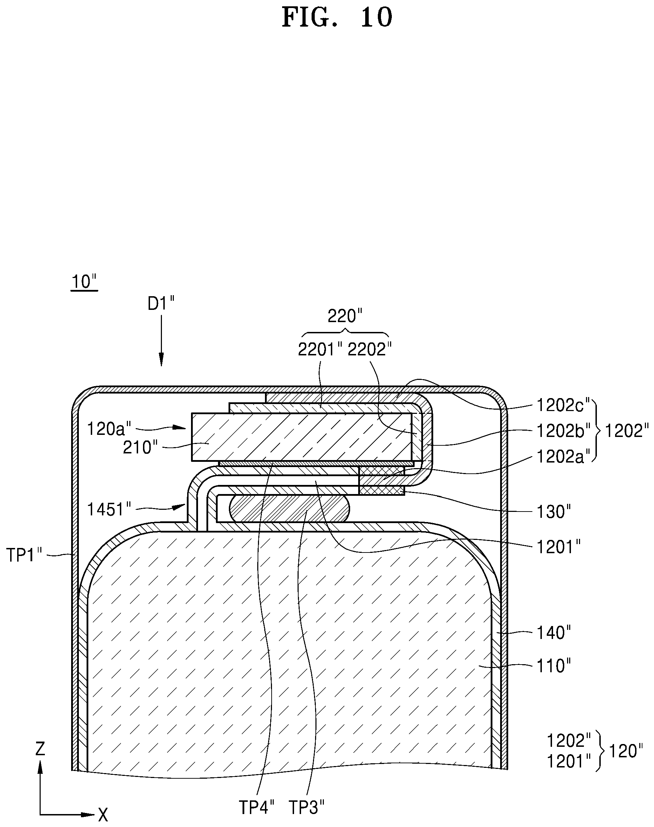

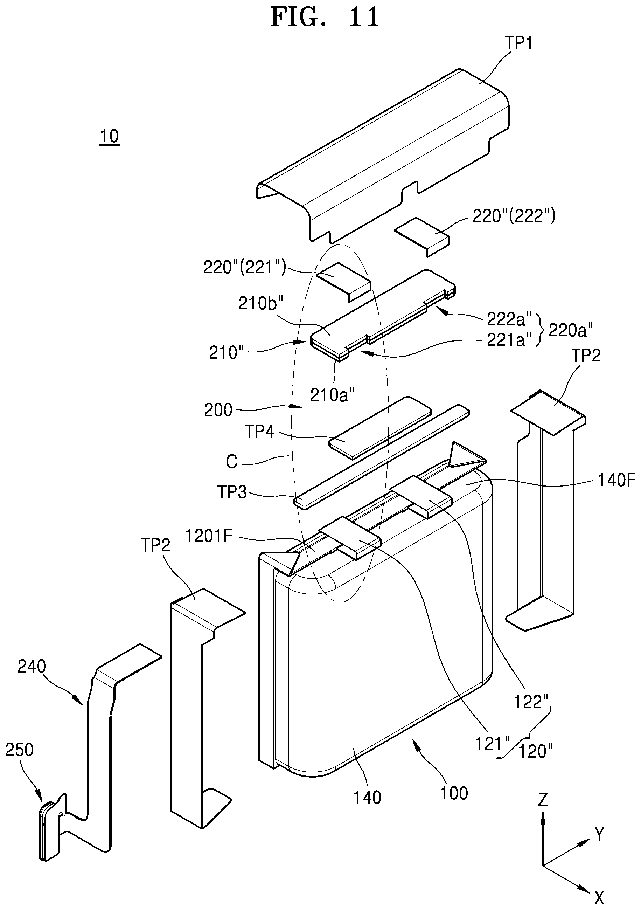

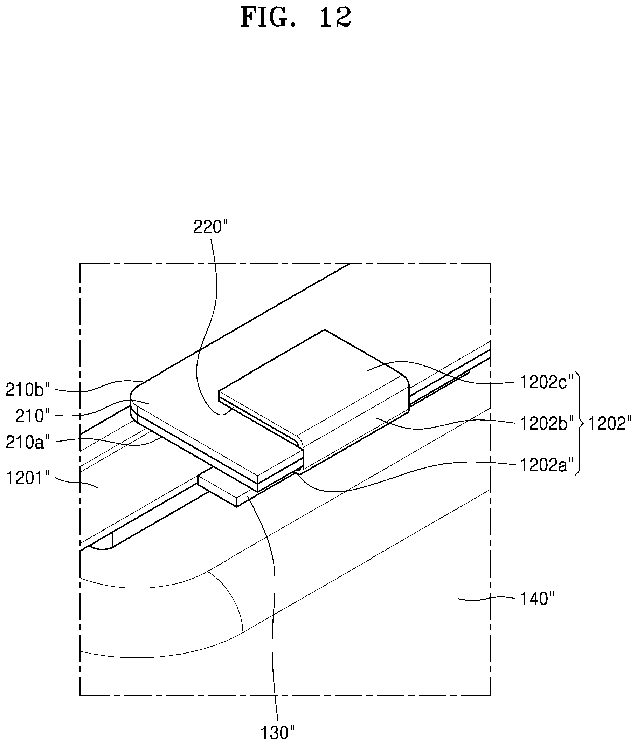

Referring to FIGS. 10 to 12, according to another embodiment of the present disclosure, a depressed portion 220a" into which a portion of an electrode tab 120" is inserted may be formed in a substrate 210". A first depressed portion 221a" and a second depressed portion 222a" may be formed in the depressed portion 220a". The substrate 210" may include a PCB portion 210a" and a molding portion 210b" covering an upper side of the PCB portion. The depressed portion 222a" may be formed by depressed of a side surface portion of the PCB portion 210a" and the molding portion 210b" of the substrate 210" in an inner direction of the substrate 210".

The electrode bending portion 1202" of the electrode tab 120" may be inserted into the depressed portion 220a". The electrode tab 120" may include a first electrode tab 121" and a second electrode tab 122". The first electrode tab 121" may be inserted into the first depressed portion 221a". The second electrode tab 122" may be inserted into the second recessed portion 222a".

Each of the first electrode tab 121" and the second electrode tab 122" may include an electrode sealing portion 1201" and an electrode bending portion 1202". The electrode bending portion 1202" may include a first electrode bending portion 1202a" extending from the electrode sealing portion 1201", a second electrode bending portion 1202b" that extends from the first electrode bending portion, and is bent in a direction in which the substrate is located based on the first electrode bending portion, and a third electrode bending portion 1202c" that extends from the second electrode bending portion, and is bent in the direction in which the substrate is located based on the second electrode bending portion. In this case, the second electrode bending portion 1202b" may be inserted into the depressed portion 220a". Accordingly, since the electrode bending portion forming the electrode tab is inserted into the depressed portion, the electrode bending portion is fixed through the depressed portion to prevent the electrode tab from flowing in the Y-axis direction and to fix the electrode tab on the substrate.

According to the present embodiment, the substrate tab 220" may be inserted into the depressed portion 220a". For example, a first substrate tab 221" may be inserted into the first depressed portion 221a". In addition, a second substrate tab 222" may be inserted into the second depressed portion 222a". More specifically, each of the first substrate tab 221" and the second substrate tab 222" of the substrate tab 220" may include a substrate connection portion 221" and a substrate bending portion 222", and the substrate bending portion 222" may be inserted into the depressed portion 222a". Accordingly, since the substrate bending portion forming the substrate tab is inserted into the depressed portion, the substrate bending portion is fixed through the depressed portion to prevent the substrate tab from flowing in the Y-axis direction and to fix the substrate tab on the substrate.

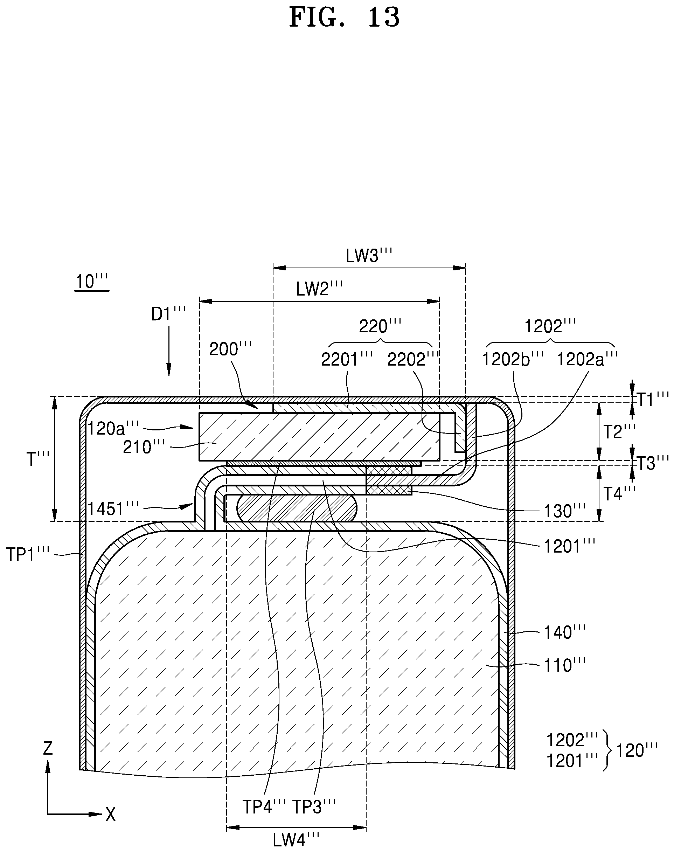

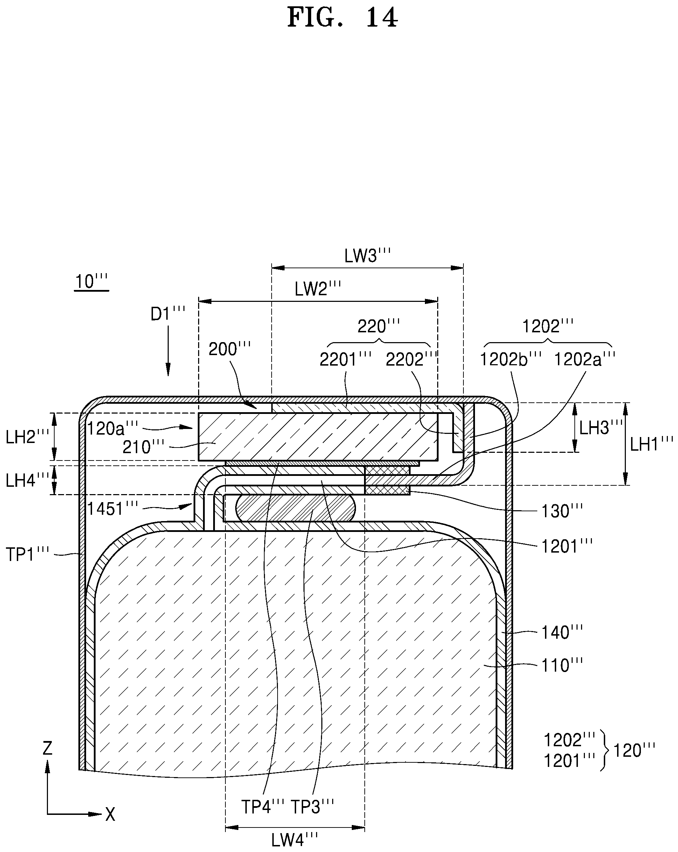

Referring to FIGS. 13 and 14, a substrate 210‴ of a battery pack 10"' according to the present embodiment supports other components (e.g., a substrate tab 220"', etc.) of a protection circuit module 200"', and may include circuit patterns and components. The substrate 210‴ may be a printed circuit board (PCB) or a flexible PCB (FPCB) and may be arranged on a battery cell. For example, as shown in FIG. 13, the substrate 210‴ may be between a fourth tape TP4‴ and the substrate tab 220"'.

At least one substrate tab 220‴ may be positioned on the substrate 210‴ and connected to an electrode tab 120"'. The at least one substrate tab 220‴ includes a conductor that may be electrically connected to the electrode tab 120‴, and may include, for example, nickel, copper, aluminum, or the like.

For example, the number of substrate tabs 220‴ may be the same as the number of electrode tabs 120‴. The substrate tab 220‴ may be at a position corresponding to the electrode tab 120‴ and may be connected to the electrode tab 120‴ through welding or the like to electrically connect the battery cell 100‴ to the protection circuit module 200‴.

The substrate tab 220‴ may include a plurality of bending portions. For example, the substrate tab 220"' may include a substrate connection portion 2201‴ and a substrate bending portion 2202‴. For example, as shown in FIG. 13, the substrate connection portion 2201‴ is located on a top surface of the substrate 210"' and may extend in a width direction of the substrate 210‴ (or a thickness direction of the battery cell or the X-axis direction of FIG. 13). The substrate connection portion 2201‴ may extend while being bent in a direction in which the substrate 210‴ is located based on a direction in which the substrate bending portion 2202‴ extends.

The substrate bending portion 2202‴ is bent at an end portion of the substrate connection portion 2201‴ and may extend in a direction different from that of the substrate connection portion 2201‴. For example, the substrate bending portion 2202‴ may extend in a height direction of the battery cell (e.g., the Z-axis direction of FIG. 13). The substrate bending portion 2202‴ may extend while being bent in a direction in which the substrate 210‴ is located based on a direction in which the substrate connection portion 2201‴ extends.

The substrate bending portion 2202‴ may be arranged between the second electrode bending portion 1202b‴ and the substrate 210‴. The substrate tab 220‴ may be in contact with the second electrode bending portion 1202b‴ and the substrate 210‴.

The substrate tab 220‴ may be in contact with the substrate 210‴. The substrate connection portion 2201‴ of the substrate tab 220‴ may be in contact with a bottom surface portion of a center portion of the first tape TP1‴.

The substrate bending portion 2202‴ of the substrate tab 220‴ may extend in a direction parallel to the second electrode bending portion 1202b‴ of the electrode bending portion 1202"', and the substrate bending portion 2202"' may be in contact with the second electrode bending portion 1202b"'. The substrate bending portion 2202‴ may be maintained to be spaced apart from a side surface portion of the substrate 210‴.

As described above, according to the present embodiment, the substrate tab 220"' is arranged between the electrode bending portion 1202‴ and the substrate 210"' to be in contact with each of the first tape TP1‴ and the substrate 210"', thereby reducing a thickness T‴ occupied by the electrode tab and the protection circuit module of FIG. 13. Accordingly, the volume occupied by the electrode tab and the protection circuit module of the entire battery pack may be reduced, thereby reducing the overall length and size of the battery pack. At the same time, the volume of the electrode assembly may be increased relative to the same size, thereby increasing the capacity of the battery pack.

The substrate tab 220"' includes a substrate connection portion 2201‴ connected to the substrate 210' and a substrate bending portion 2202"' extending from the substrate connection portion 2201‴ and bent in a direction in which the substrate is located based on the substrate connection portion 2201".

Here, the electrode bending portion 1202‴ may include a first electrode bending portion 1202a‴ extending from the electrode sealing portion 1201‴, and a second electrode bending portion 1202b‴ extending from the first electrode bending portion 1202a‴, and bent to a portion in which the substrate 210‴ is located based on the first electrode bending portion 1202a‴.

A third tape TP3‴ may be arranged between the bent electrode sealing portion 1201‴ and the housing 140"'. The third tape TP3‴ may be maintained to be adhered to the electrode sealing portion 1201‴ and the housing 140"'.

A fourth tape TP4‴ may be arranged between the bent electrode sealing portion 1201"' and the substrate 210‴. The fourth tape TP4‴ may be maintained to be adhered to the electrode sealing portion 1201'" and the substrate 210‴.

An insulating tape 130‴ formed to surround the electrode bending portion 1202‴ and being in contact with the electrode sealing portion 1201‴ may be arranged. Accordingly, the electrode bending portion 1202"' extending from the electrode sealing portion 1201‴ is not in contact with the substrate 210‴ or the housing 140‴ to prevent the electrode bending portion 1202‴ from being electrically connected to the electrode assembly 110"' accommodated in the housing 140"'.

According to the present embodiment, a first tape TP1‴ covering the housing 140‴ and the protection circuit module 200‴ may be included. In this case, a thickness T1"' of the first tape TP1‴ may be greater than a thickness T3‴ of the fourth tape TP4'". The first tape TP1‴ is formed to cover the electrode tab 120"' and the protection circuit module 200"', and may protect the electrode tab 120‴ and the protection circuit module 200‴ from external impact. Therefore, the thickness of the first tape TP1‴ may be greater than the thickness of the fourth tape TP4‴ placed between the substrate 210‴ and the electrode sealing portion 1201‴ to insulate between the two components of the substrate 210‴ and the electrode sealing portion 1201‴.

According to the present embodiment, a thickness T2‴ of the substrate 210‴ and the substrate tab 220‴ may be minimized. That is, each of the substrate 210‴ and the substrate tab 220"' is formed as a single layer, and the single-layer substrate 210"' and the single-layer substrate tab 220' are stacked on each other to form a layered structure, and a thickness T2‴ formed by the substrate 210"' and the substrate tab 220"' may be minimized. Accordingly, a thickness T‴ occupied by the electrode tab and the protection circuit module may be relatively further reduced, thereby contributing to compactness and capacity improvement of the battery pack.

Specifically, the single layer of the substrate tab 220‴ is stacked and arranged between the substrate 210‴ and the first tape TP1‴.

In addition, the substrate tab 220‴ has a width LW3‴ of the substrate connection portion 2201‴ greater than a height LH3"' of the substrate bending portion 2202‴, so that the height LH3‴ of the substrate tab 2202‴ may be minimized, and the substrate bending portion 2202‴ is bent toward the side surface portion of the substrate 210‴, so that the height of the substrate bending portion 2202‴ is absorbed by the side surface portion of the substrate 210‴, thereby minimizing the height ratio of the substrate tab 220‴ to the total battery cell. Moreover, a thickness T‴ occupied by the electrode tab and the protection circuit module may be relatively further reduced, thereby contributing to compactness and capacity improvement of the battery pack.

A top end portion of the second electrode bending portion 1202b"' may be in contact with a bottom surface portion of a center portion of the first tape TP1‴. Therefore, the height LH1‴ of the electrode tab 120‴ is minimized to further reduce the thickness T‴ occupied by the electrode tab and the protection circuit module, thereby contributing to compactness and capacity improvement of the battery pack.

In addition, a width LW2‴ of the substrate 210‴ may be greater than a height LH2"' of the substrate 210‴. Accordingly, a thickness T‴ occupied by the electrode tab and the protection circuit module may be relatively further reduced, thereby contributing to compactness and capacity improvement of the battery pack.

In addition, a width LW3‴ of the substrate tab 220‴ may be greater than a height LH3"' of the substrate tab 220"'. Accordingly, a thickness T‴ occupied by the electrode tab and the protection circuit module may be relatively further reduced, thereby contributing to compactness and capacity improvement of the battery pack.

A height LH4‴ of the electrode sealing portion 1201‴ may be less than a width LW4"' of the electrode sealing portion 1201‴. In addition, a width LW2‴ of the substrate 210‴ may be greater than the width LW4‴ of the electrode sealing portion 1201‴. Accordingly, the substrate 210‴ may completely cover the electrode sealing portion 1201‴ in the first direction D1"' in the X-axis direction of FIG. 13, thereby preventing the electrode sealing portion 1201‴ from being in contact with and electrically connected to the substrate tab 220‴. In addition, the substrate 210‴ plays a role of pressing the bent electrode sealing portion 1201‴ in a direction in which the housing 140‴ is located, and thus the electrode sealing portion 1201‴ may have a completely fixed structure in a bent state between the substrate 210"' and the housing 140"'.

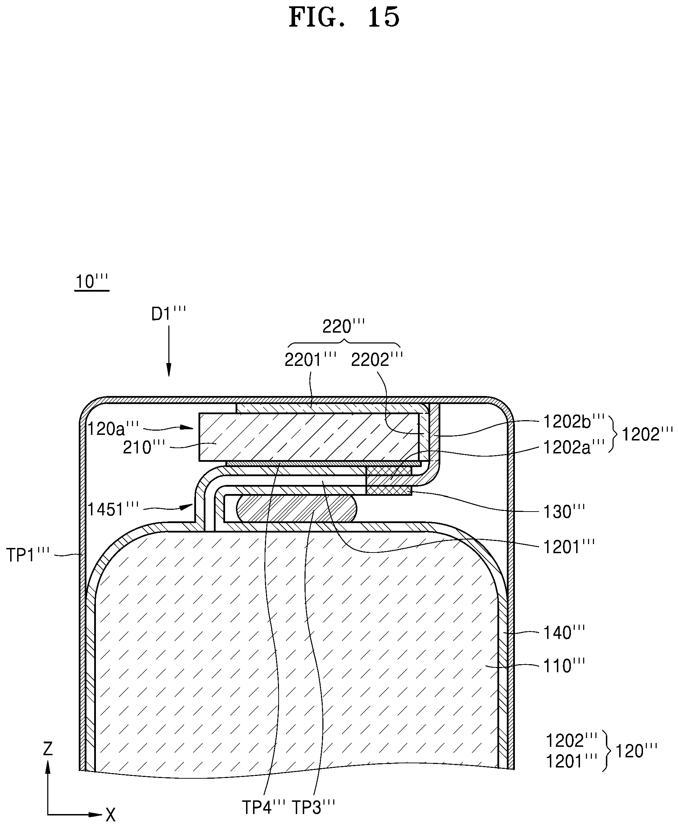

Referring to FIG. 15, the second electrode bending portion 1202b‴ and the substrate bending portion 2202‴ being in contact with the same may be in contact with the side surface portion of the substrate 210‴. Through this, the side surface portion of the substrate bending portion 2202‴ is arranged while being in contact with the side surface portion of the substrate 210"', preventing the Y-axis flow of the substrate tab 220‴ and fixing the substrate tab 220"' on the substrate 210"'.

The tape according to the embodiments described above may be replaced with an adhesive member such as a film member, a sheet member, and an adhesive member to which an adhesive is applied or which has an adhesive force.

Although the present disclosure has been described with reference to the embodiments illustrated in the drawings as described above, this is only an example. Those of ordinary skill in the art may fully understand that various modifications and equivalent other embodiments are possible from embodiments. Therefore, the true technical protection scope of the present disclosure should be determined on the basis of the appended claims.

## Claims

1. A battery pack comprising:
a battery cell; and
a protection circuit module connected to the battery cell, wherein
the battery cell comprises
an electrode assembly and
an electrode tab extending from the electrode assembly,
the protection circuit module comprises a substrate and a substrate tab connected to the substrate,
the electrode tab comprises an electrode sealing portion extending from a housing of the electrode assembly and an electrode bending portion extending from the electrode sealing portion, and
the substrate tab is arranged between the electrode bending portion and the substrate and is formed to be in contact with the electrode bending portion and the substrate.

2. The battery pack of claim 1, wherein the substrate tab comprises a substrate connection portion connected to the substrate and a substrate bending portion extending from the substrate connection portion and bent in a direction in which the substrate is located based on the substrate connection portion.

3. The battery pack of claim 2, wherein the electrode bending portion comprises: a first electrode bending portion extending from the electrode sealing portion; a second electrode bending portion extending from the first electrode bending portion and bending in a direction in which the substrate is located based on the first electrode bending portion; and a third electrode bending portion extending from the second electrode bending portion and bent in a direction in which the substrate is located based on the second electrode bending portion.

4. The battery pack of claim 3, wherein the third electrode bending portion is in contact with the substrate connection portion.

5. The battery pack of claim 3, wherein the second electrode bending portion is in contact with the substrate bending portion.

6. The battery pack of claim 3, wherein the third electrode bending portion is arranged between a first tape and the substrate tab.

7. The battery pack of claim 1, wherein the substrate tab and a_third electrode bending portion are stacked and arranged in a single layer between the substrate and a first tape.

8. The battery pack of claim 1, wherein a third tape is arranged between a bent electrode sealing portion and the electrode assembly.

9. The battery pack of claim 1, wherein a fourth tape is arranged between a bent electrode sealing portion and the substrate.

10. The battery pack of claim 1, wherein an insulating tape is arranged between the electrode sealing portion and the electrode bending portion.

11. The battery pack of claim 1, further comprising a first tape covering the electrode assembly and the protection circuit module.

12. The battery pack of claim 11, wherein a thickness T1' of the first tape is greater than a thickness T4' of a fourth tape.

13. The battery pack of claim 1, wherein a width LW3' of the substrate tab is greater than a height LH3' of the substrate tab.

14. The battery pack of claim 1, wherein a width LW2' of the substrate is greater than a height LH3' of the substrate.

15. The battery pack of claim 1, wherein the substrate has a depressed portion into which a portion of the electrode tab is inserted.

16. The battery pack of claim 15, wherein the electrode bending portion of the electrode tab comprises:
a first electrode bending portion extending from the electrode sealing portion;
a second electrode bending portion which extends from the first electrode bending portion and is bent in a direction in which the substrate is located with respect to the first electrode bending portion; and
a third electrode bending portion which extends from the second electrode bending portion and is bent in a direction in which the substrate is located with respect to the second electrode bending portion, wherein
the second electrode bending portion is inserted into the depressed portion.

17. The battery pack of claim 15, wherein the substrate tab is inserted into the depressed portion.

18. The battery pack of claim 17, wherein the substrate tab comprises:
a substrate connection portion connected to the substrate; and
a substrate bending portion extending from the substrate connection portion and bent in a direction in which the substrate is located based on the substrate connection portion, and
the substrate bending portion is inserted into the depressed portion.

19. The battery pack of claim 15, wherein the substrate comprises a printed circuit board (PCB) portion and a molding portion covering an upper side of the PCB portion.

20. The battery pack of claim 19, wherein the depressed portion is formed by depressing a side surface of the PCB portion and the molding portion of the substrate in an inner direction of the substrate.
